Europäisches Patentamt

European Patent Office

Office européen des brevets

(19)

(11) **EP 0 572 976 B1**

(12) **EUROPEAN PATENT SPECIFICATION**

(45) Date of publication and mention
of the grant of the patent:
**09.04.1997 Bulletin 1997/15**

(51) Int Cl.6: **G01C 19/56, H04N 5/232**

(21) Application number: **93108798.5**

(22) Date of filing: **01.06.1993**

(54) **Angular velocity sensor and camera including the same**

Winkelgeschwindigkeitsmessaufnehmer und damit ausgerüstete Kamera

Capteur de vitesse angulaire et caméra comportant le dit capteur

(84) Designated Contracting States:
**BE CH DE ES FR GB IT LI NL SE**

(30) Priority: **03.06.1992 JP 142764/92**

(43) Date of publication of application:
**08.12.1993 Bulletin 1993/49**

(73) Proprietor: **CANON KABUSHIKI KAISHA
Tokyo (JP)**

(72) Inventors:
- **Fushimi, Masahiro, c/o Canon Kabushiki Kaisha
  Ohta-ku, Tokyo (JP)**
- **Hirai, Yutaka, c/o Canon Kabushiki Kaisha
  Ohta-ku, Tokyo (JP)**
- **Isaka, Kazuo, c/o Canon Kabushiki Kaisha
  Ohta-ku, Tokyo (JP)**
- **Takagi, Hiroshi, c/o Canon Kabushiki Kaisha
  Ohta-ku, Tokyo (JP)**
- **Yagi, Takayuki, c/o Canon Kabushiki Kaisha
  Ohta-ku, Tokyo (JP)**
- **Akaike, Masatake, c/o Canon Kabushiki Kaisha
  Ohta-ku, Tokyo (JP)**

(74) Representative: **Weser, Wolfgang
Dres. Weser & Martin,
Patentanwälte,
Radeckestrasse 43
81245 München (DE)**

(56) References cited:
**EP-A- 0 264 685          DE-A- 3 741 036
GB-A- 2 186 085          US-A- 5 117 246**

# Description

The present invention relates to an angular velocity sensor capable of simultaneously detecting angular velocities about multiple axes and a camera including the same.

As a conventional means for detecting the angular velocity of an object, a gyro is known. As is well known, the gyro comprises a mechanical mechanism utilizing the principle of a top. The gyro comprising the mechanical mechanism can detect an angular velocity with high precision, but requires high-precision parts and, hence, is very expensive since it has a quasi-mechanical structure. In addition, the gyro undesirably has a large volume and weight. For this reason, although demand for high-precision detection of an angular velocity using the gyro has increased, when the conventional mechanical gyro is equipped in various apparatuses or devices, the apparatuses or devices undesirably become large and heavy. For this reason, the conventional mechanical gyro is utilized in only a relatively limited field.

However, recently, since a vibration gyro, which uses a vibrating member such as a tuning fork in place of a rotary top arranged in the conventional mechanical gyro, has been developed, the application field of the gyro is expanded, and a gyro type detector is expected to be increasingly used in various devices and apparatuses.

The above-mentioned vibration gyro detects an angular velocity by detecting a Coriolis' force generated in a vibrating member when the angular velocity caused by an external force is applied to the vibrating member such as a tuning fork which vibrates at a constant frequency. Since the vibration gyro does not require a rotary top, it is compact, can be manufactured with low cost, and allows high-precision detection. For this reason, it is expected that the vibration gyro is utilized in various devices.

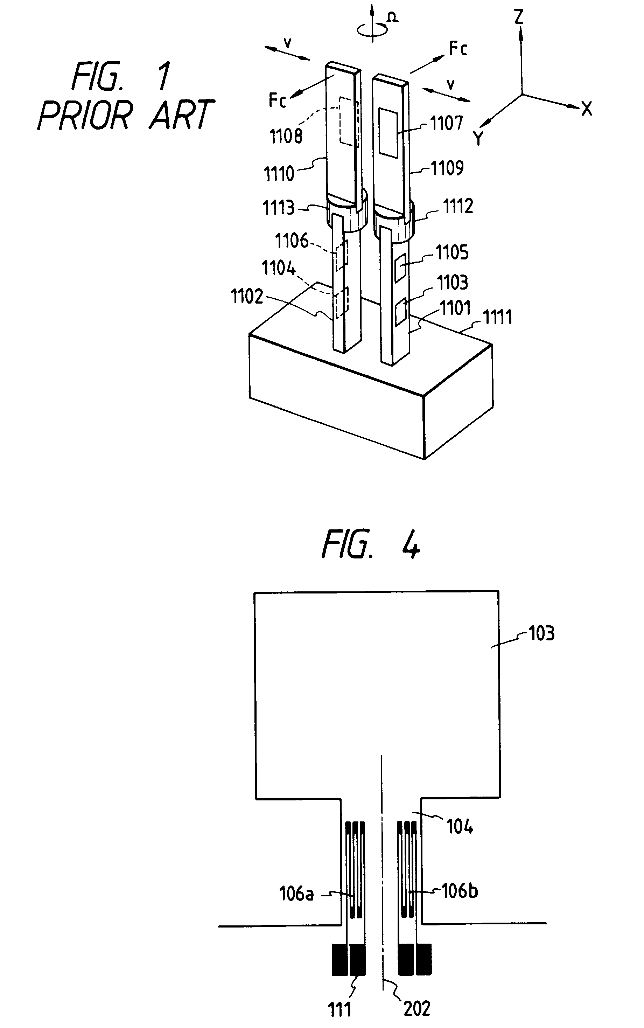

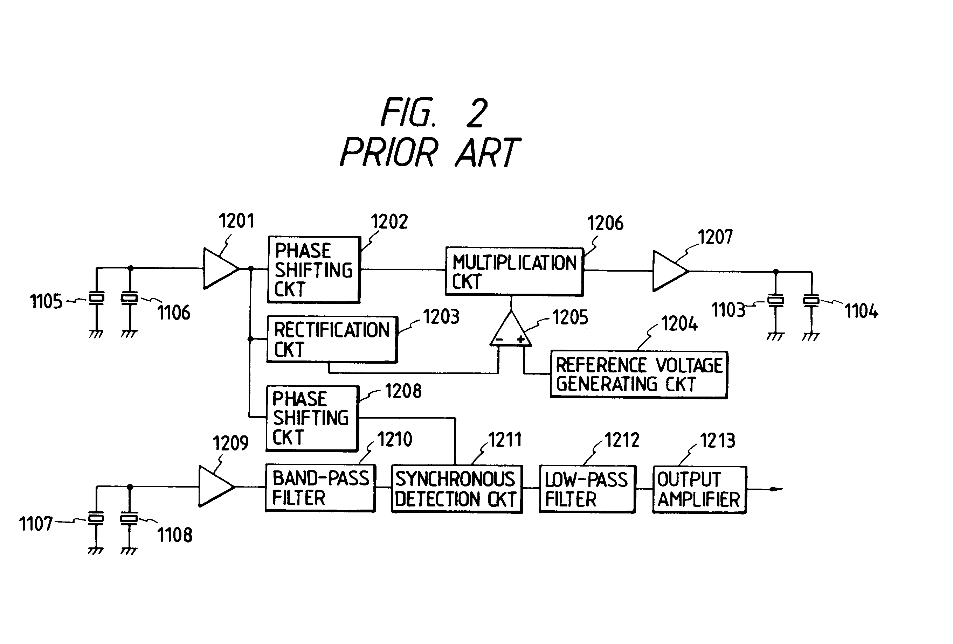

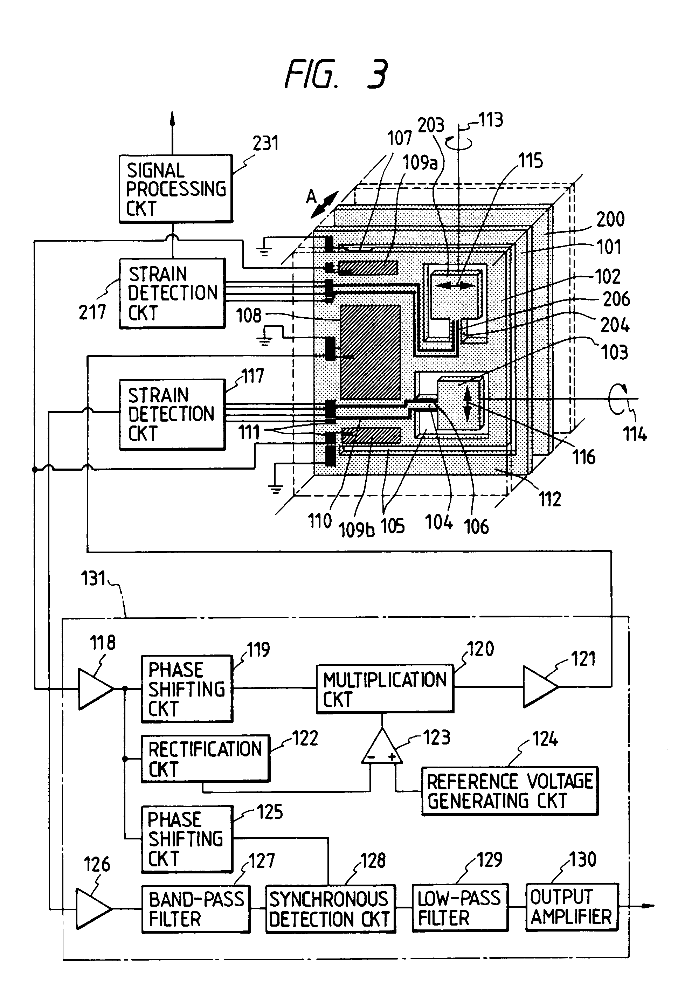

An angular velocity sensor comprising the vibration gyro will be described below with reference to Figs. 1 and 2. The vibration gyro shown in Fig. 1 includes fixed vibration pieces 1101 and 1102, driving piezoelectric elements 1103 and 1104, respectively attached to the vibration pieces 1101 and 1102, for vibrating stationary members 1112 and 1113 in the X-direction in Fig. 1, monitor piezoelectric elements 1105 and 1106 for monitoring actual vibrations of the vibration pieces 1101 and 1102, which are vibrated by the driving piezoelectric elements 1103 and 1104, detection vibration pieces 1109 and 1110 respectively attached to the stationary members 1112 and 1113, and detection piezoelectric elements 1107 and 1108, respectively attached to the detection vibration pieces 1109 and 1110, for detecting angular velocities. In this vibration gyro, assuming that a base portion 1111 is pivoted about the Z-axis at an angular velocity $\Omega$ in a state wherein the vibration pieces 1101 and 1102 are vibrating in opposing directions parallel to the X-direction at a resonance frequency $\omega_1$, Co-

riolis' forces Fc proportional to the angular velocity $\Omega$ act on the detection vibration pieces 1109 and 1110 in the Y-direction. At this time, an X-velocity v of each of the vibration pieces 1101 and 1102 which are vibrating in the X-direction is given by:

$$v = A \cdot \omega_1 \cdot \cos \omega_1 t \qquad (1)$$

where A is the amplitude, t is time, and $\omega_1$ is the resonance frequency of the vibration pieces 1101 and 1102.

If the mass of each of the detection vibration pieces 1109 and 1110 is represented by M, the Coriolis' force Fc is given by:

$$Fc = 2 \cdot A \cdot M \cdot \Omega \cdot \omega_1 \cos \omega_1 t \qquad (2)$$

As is apparent from equation (2), upon application of the Coriolis' forces Fc, the detection vibration pieces 1109 and 1110 vibrate in the Y-direction, and their amplitudes are proportional to the angular velocity $\Omega$. For this reason, the angular velocity $\Omega$ can be obtained by detecting the amplitudes of the detection vibration pieces 1109 and 1110.

An angular velocity detection method using the arrangement shown in Fig. 1 will be described below with reference to Fig. 2. In Fig. 2, piezoelectric elements 1103, 1104, 1105, 1106, 1107, and 1108 correspond to the driving piezoelectric elements 1103 and 1104, the monitor piezoelectric elements 1105 and 1106, and the detection piezoelectric elements 1107 and 1108 shown in Fig. 1. A circuit shown in Fig. 2 includes amplifiers 1201, 1207, and 1209. The amplifier 1201 amplifies signals from the monitor piezoelectric elements 1105 and 1106, the amplifier 1207 supplies a driving signal to the driving piezoelectric elements 1103 and 1104, and the amplifier 1209 amplifies angular velocity detection signals from the detection piezoelectric elements 1107 and 1108. A phase shifting circuit 1202 shifts the phase of a monitor output amplified by the amplifier 1201. A rectification circuit 1203 rectifies a signal from the amplifier 1201, and generates a rectified voltage. A reference voltage generating circuit 1204 generates a reference voltage for suppressing an input voltage to the driving piezoelectric elements 1103 and 1104 so as to make constant the amplified voltage from the amplifier 1201. A differential amplifier 1205 generates an output obtained by amplifying a difference between the output voltage from the rectification circuit 1203 and the reference voltage from the reference voltage generating circuit 1204. A multiplication circuit 1206 multiplies the output voltage from the phase shifting circuit 1202 with the output voltage from the differential amplifier 1205, and applies the product to the driving piezoelectric elements 1103 and 1104 via the amplifier 1207.

A band-pass filter 1210 allows frequency band components corresponding to the resonance frequency $\omega_1$ of the vibration pieces 1101 and 1102 of the output signals from the detection piezoelectric elements 1107 and 1108, which signals are amplified by the amplifier 1209, to pass therethrough. The output signal from the band-pass filter 1210 is synchronously detected by a synchronous detection circuit 1211 on the basis of the output signal from a phase shifting circuit 1208, thus generating a synchronously detected voltage. A low-pass filter 1212 allows a specific low-frequency component of the output from the synchronous detection circuit 1211 to pass therethrough. An output amplifier 1213 amplifies the output from the low-pass filter 1212, and generates an output representing the angular velocity $\Omega$.

In Fig. 2, when the vibration pieces 1101 and 1102 are excited by the driving piezoelectric elements 1103 and 1104 attached thereto, they vibrate in the X-direction, and resonate with each other. Therefore, the detection vibration pieces 1109 and 1110 attached to the vibration pieces 1101 and 1102 similarly vibrate. At this time, the monitor piezoelectric elements 1105 and 1106 respectively amplify monitor voltages proportional to the amplitudes of the vibrations in the X-direction of the vibration pieces 1101 and 1102 and the detection vibration pieces 1109 and 1110. The phase shifting circuit 1202 generates an output voltage obtained by phase-shifting the output voltage from the amplifier 1201 through 90°. At the same time, the rectification circuit 1203 generates a positive voltage obtained by rectifying the output voltage from the amplifier 1201. Therefore, the differential amplifier 1205 generates an output obtained by amplifying a difference between the output voltage from the rectification circuit 1203 and the reference voltage from the reference voltage generating circuit 1204, and supplies this output to the multiplication circuit 1206. The multiplication circuit 1206 fetches the output from the phase shifting circuit 1202 (i.e., a signal obtained by phase-shifting the outputs from the monitor piezoelectric elements 1105 and 1106 through 90°) and the output from the differential amplifier 1205, and generates an output equal to a product of the fetched outputs. The amplifier 1207 amplifies the output from the multiplication circuit 1206. The outputs from the monitor piezoelectric elements 1105 and 1106 are fed back to the driving piezoelectric elements 1103 and 1104 via the multiplication circuit 1206, and the driving piezoelectric elements 1103 and 1104 are controlled by the multiplication circuit 1206 to be always driven at a constant voltage.

When the base portion 1111 is pivoted about the Z-axis at the angular velocity $\Omega$, the detection vibration pieces 1101 and 1102 are displaced by the Coriolis forces Fc in the Y-direction in proportion to the angular velocity $\Omega$. Therefore, the detection piezoelectric elements 1107 and 1108 respectively generate outputs proportional to the products of the vibration velocities v of the vibration pieces and the angular velocity $\Omega$, and these outputs are amplified by the amplifier 1209. Thereafter, the amplified outputs are input to the band-pass filter 1210.

The outputs from the detection piezoelectric elements 1107 and 1108 are amplitude-modulated waves obtained by amplitude-modulating the resonance frequency $\omega_1$ of the vibration pieces 1101 and 1102 with the angular velocity $\Omega$, and the pass band of the band-pass filter 1210 is set at the resonance frequency $\omega_1$. For these reasons, the output from the band-pass filter 1210 corresponds to one obtained by filtering out the vibration components at the resonance frequency $\omega_1$ from the outputs from the detection piezoelectric elements 1107 and 1108.

The output from the band-pass filter 1210 is synchronously detected by the synchronous detection circuit 1211 on the basis of the output from the phase shifting circuit 1208. The output from the phase shifting circuit 1208 is obtained by phase-shifting the outputs from the monitor piezoelectric elements 1105 and 1106 through 90°, and hence, the output from the synchronous detection circuit 1211 is proportion to $\Omega$.

The output from the synchronous detection circuit 1211 is input to the low-pass filter 1212. The low-pass filter 1212 removes high-frequency components from the input. Then, the output from the low-pass filter 1212 is input to the output amplifier 1213. The output amplifier 1213 amplifies the output from the low-pass filter 1212 to a proper amplitude, and outputs the amplified signal. This output signal is supplied to, e.g., a display.

As described above, the vibration gyro is smaller and requires lower cost than a gyro comprising a mechanical mechanism utilizing the principle of a top. However, the size and cost of the vibration gyro are not sufficiently small for a compact device. In particular, in a system requiring multi-axis detection, one angular velocity sensor is required for one detection axis, and angular velocity sensors and a mounting space corresponding to detection axes are required. For this reason, when the conventional angular velocity sensors are used in a system requiring multi-axis detection, it is difficult to make the system compact.

The GB-A-2 186 085 discloses an accelerometer transducer 100 having a base or substrate holding a sheet or first portion normal to an input axis. This first portion is suspended from the substrate by a first spring arrangement for oscillatory motion in the way of limited angular excursions about a central axis lying in the first portion. A weight or a second portion is spring-suspended from the first portion in manner permitting displacement of the centre of gravity of the second portion along the input axis. Acceleration along the input axis varies the moment of inertia of the assembly consisting of the first and second portions about the central axis, altering the frequency of the oscillatory motion by an amount functionally related to the magnitude of the acceleration. Electrostatic, electromagnetic or piezoelectric means are provided to drive the first portion at its characteristic frequency and further means are provided to measure its frequency of oscillation. The second portion has a mass imbalance with respect to its central axis, resulting in pendulous motion about this axis with accelerations along the input axis.

The EP-A-0 264 685 discloses a TV-camera having a target. Acceleration sensors are provided at the housing of the camera. The outputs of sensors are used to control the scanning of the target so that move of an image to be taken by the camera is reduced.

The present invention has been made to solve the cconventional problems, and has as its object to provide a compact, low-cost angular velocity sensor capable of simultaneously detecting angular velocities about multiple axes, and a camera including the same.

This object is attained by the features of claim 1, concerning the angular velocity sensor, and by the features of claim 13, concerning the camera. Advantageous developments of the invention are defined in the subclaims.

According to the present invention, since an angular velocity sensor is manufactured by working a flat plate, a sensor having a small thickness can be realized. As a flat plate material of the present invention, materials such as single-crystal silicon, quartz, photosensitive glass, and the like, which can be etched using a photolithography method, can be used. Since the photolithography method allows application of an etching processing having high precision, a shape having high dimensional precision can be worked, and as a result, an angular velocity sensor having high sensitivity can be provided.

A driving source having a high driving force such as a piezoelectric element using sintered PZT (lead zirconate titanate) can be used. Since a common driving unit is used, the size of the driving unit can be increased relative to the size of each sensor, and excitation of vibration with high controllability is allowed even in a compact sensor by a reduction in working error with respect to the size and by a large driving force.

Fig. 1 is a schematic perspective view showing a conventional angular velocity sensor;
Fig. 2 is a block diagram showing a signal processing circuit of the angular velocity sensor shown in Fig. 1;
Fig. 3 is a schematic perspective view and a diagram showing an angular velocity sensor according to the first embodiment of the present invention;
Fig. 4 is an enlarged view of a detection portion shown in Fig. 3;
Fig. 5 is a schematic diagram showing a signal processing circuit of the angular velocity sensor shown in Fig. 3;
Figs. 6A to 6H are schematic sectional views for explaining the manufacturing processes of the angular velocity sensor shown in Fig. 3;
Fig. 7 is a schematic perspective view showing a camera including the angular velocity sensor shown in Fig. 3;

Fig. 8 is a schematic plan view showing an angular velocity sensor according to the second embodiment of the present invention;
Figs. 9A to 9E are schematic sectional views for explaining the manufacturing processes of the angular velocity sensor shown in Fig. 8;
Fig. 10 is a schematic plan view showing a modification of a detection portion in the second embodiment;
Fig. 11 is a schematic plan view showing another modification of the detection portion in the second embodiment;
Fig. 12 is a schematic plan view showing still another modification of the detection portion in the second embodiment; and
Fig. 13 is a schematic plan view showing an angular velocity sensor according to the third embodiment of the present invention.

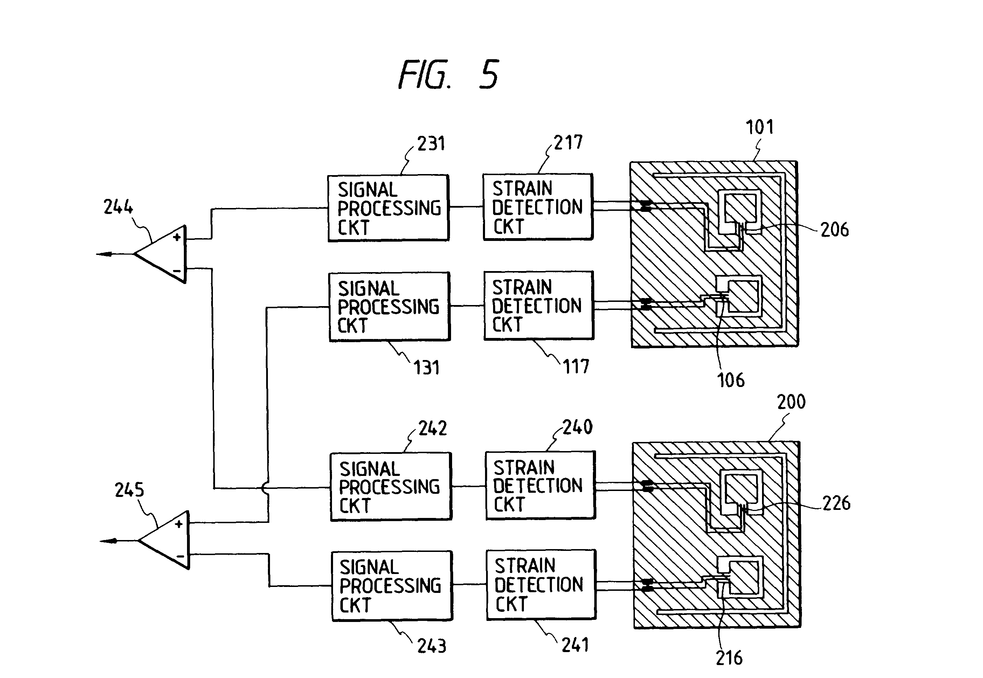

Figs. 3 to 5 show an angular velocity sensor according to the first embodiment of the present invention. More specifically, Fig. 3 is a schematic perspective view and a diagram of the angular velocity sensor, Fig. 4 is an enlarged view of a detection portion, and Fig. 5 is a schematic diagram showing a signal processing circuit.

In Fig. 3, a sensor comprises a flat single-crystal silicon substrate 101. By removing a portion of this substrate to form gaps 105, a movable portion 102, weight portions 103 and 203, and detection beam portions 104 and 204 are formed. The movable portion 102 has a cantilever beam structure. The substrate 101 has a smaller thickness than other portions at a beam root portion 107 of the movable portion 102, and the movable portion 102 is formed to be able to be vibrated in the direction of an arrow A perpendicular to the surface of the substrate. The movable portion 102 is vibrated by an excitation PZT piezoelectric element 108 as a driving source in the direction of the arrow A with respect to a base portion 112 of the substrate. The vibration of the movable portion 102 is detected by excitation detection PZT piezoelectric elements 109a and 109b.

The weight portion 103 and the beam portion 104 are formed in one portion of the movable portion 102. The beam portion 104 has a shape elongated in a direction parallel to a rotational axis 114 parallel to the substrate surface, and supports the weight portion 103 with respect to the movable portion 102. The weight portion 203 and the beam portion 204 are formed in another portion of the movable portion 102. The beam portion 204 has a shape elongated in a direction parallel to a rotational axis 113 parallel to the substrate surface and perpendicular to the rotational axis 114, and supports the weight portion 203 with respect to the movable portion 102. More specifically, the weight portion 203 and the beam portion 204 define a shape obtained by rotating the weight portion 103 and the beam portion 104 through 90°.

When the substrate 101 is rotated about the rotational axis 114 while the movable portion 102 is vibrated by the piezoelectric element 108, the weight portion 103 and the beam portion 104 receive a Coriolis' force corresponding to the angular velocity of a rotation in the direction of an arrow 116, and the beam portion 104 deforms. Similarly, when the substrate 101 is rotated about the rotational axis 113, the weight portion 203 and the beam portion 204 receive a Coriolis' force corresponding to the angular velocity of a rotation in the direction of an arrow 115, and the beam portion 204 deforms. In this embodiment, by detecting the deformation amounts of the beam portions 104 and 204, the angular velocities about the rotational axes 114 and 113 are respectively detected.

The deformation of the beam portion 104 is detected by a detection element 106 attached to the beam portion 104. The detection element 106 consists of a pair of piezo resistors 106a and 106b, as shown in the enlarged view of a detection portion in Fig. 4. These piezo resistors 106a and 106b are attached to be symmetrical about a central line 202 in the longitudinal direction of the beam portion. As described above, upon reception of the Coriolis' force, the beam portion 104 deforms to contract at one side of the central line 202 and to expand on the other side thereof. For this reason, upon deformation of the beam portion 104, the resistances of the piezo resistors 106a and 106b have a difference therebetween. When this resistance difference is converted into a voltage signal by a strain detection circuit 117 shown in Fig. 3, the deformation of the beam portion 104 is detected. The output signal from the strain detection circuit 117 is input to a signal processing circuit 131, and the signal processing circuit 131 outputs a detection signal of the angular velocity of the rotation about the rotational axis 114. The detection element 106 and the strain detection circuit 117 are connected to each other via lead electrodes 110 and lead electrode lead portions 111.

Similarly, the deformation of the beam portion 204 is detected by a detection element 206 attached to the beam portion 204. The detection element 206 consists of a pair of piezo resistors as in the detection element 106, and is connected to a strain detection circuit 217. The strain detection circuit 217 detects the deformation of the beam portion 204 as in the strain detection circuit 117, and outputs a voltage signal. The output signal from the strain detection circuit 217 is input to a signal processing circuit 231 as in the signal processing circuit 131, and the signal processing circuit 231 outputs a detection signal of the angular velocity about the rotational axis 113.

In the signal processing circuit 131, the output signal from the strain detection circuit 117 is amplified by an amplifier 126, and is input to a synchronous detection circuit 128 via a band-pass filter 127 which allows a frequency band component of a resonance frequency $\omega_1$ of the piezoelectric element 108 to pass therethrough. On the other hand, detection signals of the vibration of the movable portion 102 output from the excitation detection PZT piezoelectric elements 109a and 109b are amplified by an amplifier 118. The output from the amplifier 118 is phase-shifted by a phase shifting circuit 125, and the phase-shifted signal is input to the synchronous detection circuit 128. The synchronous detection circuit 128 synchronously detects the output signal from the filter 127 on the basis of the output signal from the phase shifting circuit 125, and outputs the detected signal as a synchronously detected voltage. The output from the synchronous detection circuit 128 is amplified by an output amplifier 130 via a low-pass filter 129 which allows a specific low-frequency component to pass therethrough, and is output as a detection signal of the angular velocity.

The output voltage from the amplifier 118 is rectified by a rectification circuit 122, and a differential amplifier 123 outputs a voltage corresponding to a difference between the output signal from the rectification circuit 122 and a reference voltage generated by a reference voltage generating circuit 124. The output voltage from the differential amplifier 123 is multiplied with the output voltage from the amplifier 118, which is input to a multiplication circuit 120 via a phase shifting circuit 119, thereby controlling the output from the multiplication circuit 120 to be constant. The output from the multiplication circuit 120 is input to the excitation PZT piezoelectric element 108 via an amplifier 121, thus stably vibrating the movable portion 102.

The operation of the angular velocity sensor will be described below. In this embodiment, the movable portion 102 is vibrated in the direction of the arrow A by applying a constant AC voltage to the excitation PZT piezoelectric element 108. At this time, the outputs from the driving detection PZT piezoelectric elements 109a and 109b are detected, and the AC voltage to be applied to the excitation PZT piezoelectric element 108 is adjusted by a driving circuit including the amplifier 118, the phase shifting circuit 119, the multiplication circuit 120, the amplifier 121, the rectification circuit 122, the differential amplifier 123, and the reference voltage generating circuit 124, so that the driving frequency has a desired value, thereby obtaining a constant vibration. When the angular velocities about the rotational axes 113 and 114 are applied to the vibrating movable portion 102, the weight portion 103 and the beam portion 104 as the detection portion receive the Coriolis' force in the direction of the arrow 116, and the beam portion 104 is subjected to flexural deformation in this direction. At this time, the strain detection circuit 117 detects a resistance difference (strain amount), caused by the deformation, of the pair of piezo resistors 106a and 106b formed at two sides of a neutral surface of the beam. The strain detection circuit 117 converts the detected resistance difference into a voltage signal, and outputs the voltage signal. The output signal from the strain detection circuit 117 is converted into a signal representing the angular velocity via the amplifier 126, the band-pass filter 127, the synchronous detection circuit 128, the low-pass filter 129, and the output amplifier 130, and the converted signal is output from the output amplifier 130.

Similarly, a detection signal of the angular velocity of the rotation about the rotational axis 113 is output from the signal processing circuit 231 via the strain detection circuit 217 on the basis of the output from the detection element 206.

With the above-mentioned arrangement, the angular velocities of the rotations about the two rotational axes 113 and 114 can be satisfactorily detected. In this embodiment, a substrate 200 having the same arrangement as that of the substrate 101 is additionally arranged to be parallel to the substrate 101. The movable portions of the substrates 101 and 200 are vibrated in opposite phases in the direction of the arrow A. The substrate 200 has a detection element 216 having the same arrangement as that of the detection element 106, and a signal processing circuit 243 having the same arrangement as that of the signal processing circuit 131 outputs a detection signal of the angular velocity via a strain detection circuit 241. Since the movable portions of the substrates 101 and 200 are vibrated in opposite phases, the output from the signal processing circuit 243 becomes a signal obtained by inverting the phase of the output from the signal processing circuit 131. Therefore, when the outputs from these signal processing circuits 131 and 243 are differentiated by a differential amplifier 245, a detection signal of the angular velocity of the rotation about the rotational axis 114 can be obtained.

Similarly, an output signal from a detection element 226 having the same arrangement as that of the detection element 206 is input to a signal processing circuit 242 having the same arrangement as that of the signal processing circuit 231 via a strain detection circuit 240. A differential amplifier 244 differentiates the outputs from the signal processing circuits 242 and 231, thereby obtaining a detection signal of the angular velocity of the rotation about the rotational axis 113. In this embodiment, the influence of a disturbance on the angular velocity sensor can be minimized, and angular velocities can be detected with higher precision. Note that the differential amplifiers 244 and 245 may be arranged at any positions between the strain detection circuits and the signal processing circuits to obtain substantially the same effect as described above. Therefore, the differential amplifiers can be arranged at proper positions in consideration of the circuit scale, circuit characteristics, and the like.

In this embodiment, the driving frequency was set to be 15 kHz, and the input voltage was set to be ±5 V. When the obtained outputs were detected in the above-mentioned arrangement, angular velocities could be satisfactorily detected in the two axial directions, and an output of 0.1 mV was obtained at an angular velocity of 1°/sec.

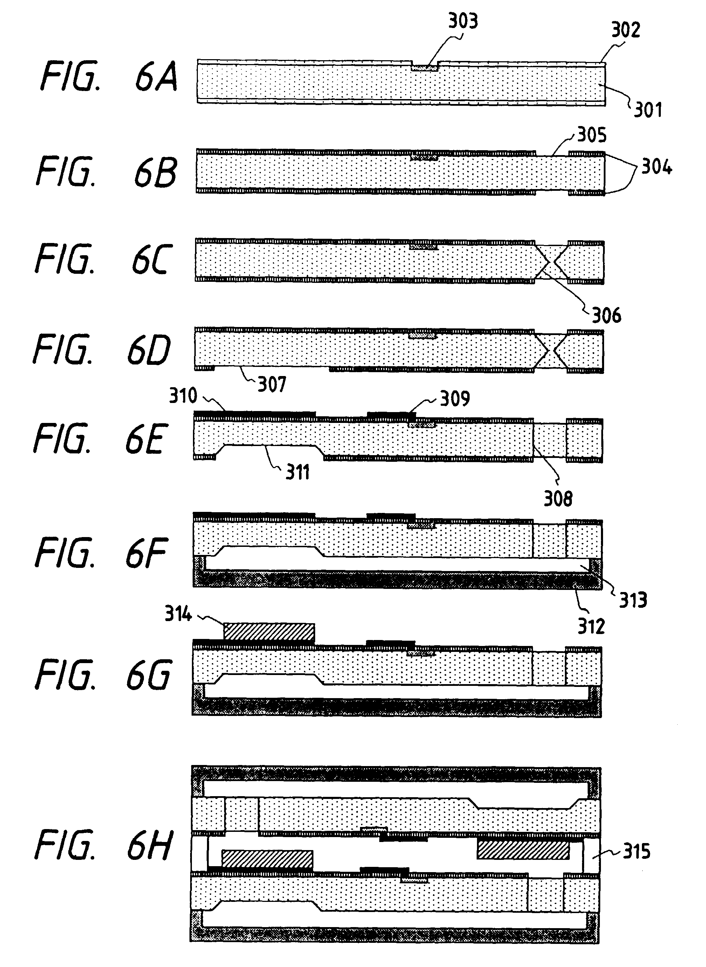

In this embodiment, the movable portion 102, the weight portions 103 and 203, and the beam portions 104 and 204 are integrally formed by anisotropically etching a 1-mm thick n-type single-crystal silicon substrate having a <100> direction. This manufacturing method will be described in detail below with reference to Figs. 6A to 6H.

Figs. 6A to 6H illustrate a silicon substrate 301, a thermal oxide film 302, a piezo resistor portion 303, a silicon nitride film 304, an etching portion 305 for forming the beam portions 104 and 204, the weight portions 103 and 203, and the movable portion 102, a silicon (111) surface 306, an etching portion 307 for a driving portion, a vertical etching surface 308, a piezo resistor electrode 309, a driving electrode 310, a driving cantilever beam portion 311, a glass substrate 312, a groove portion 313 formed in the glass substrate, a PZT sintered body 314, and a Teflon sheet 315.

In Fig. 6A, after a required thermal oxide film 302 was formed on a single-crystal substrate 301, a resist was patterned by a photolithography technique to form a piezo resistor pattern by removing a portion of the thermal oxide film 302 by etching. Then, a p-type piezo resistor 303 was formed using an ion-implantation method. At this time, the width of a beam portion on the upper surface of the movable portion was set to be 100 μm, and piezo resistor portions each having a 10-μm wide resistor line were formed at two sides of a neutral surface of each of the beam portions 104 and 204. As shown in Fig. 6B, a 0.2-μm thick silicon nitride film 304 was deposited on the two surfaces of the substrate by an LPCVD method using a mixture of dichloro silane and ammonia gas as a source gas. Then, the silicon nitride films on etching portions 305, on the two surfaces of the substrate, for forming the weight portions 103 and 203, the detection beam portions 104 and 204, and the movable portions 102 of the detection portions were removed by a photolithography method using a double-sided mask aligner device. The silicon nitride films were removed by a reactive ion etching method using carbon tetrafluoride. The substrate was etched for a required period of time in an aqueous potassium hydroxide solution heated to about 110°C, thus obtaining a state shown in Fig. 6C. Note that a (111) crystal plane 306 of silicon appears depending on a difference in etching rate between crystal planes. Then, as shown in Fig. 6D, a cantilever beam structure, which allows the movable portion formed with the detection portions to be able to be driven in a direction perpendicular to the surface, is manufactured. In this case, etching was performed to adjust the thickness of the root portion 107 of the cantilever beam and to obtain a desired driving frequency. In this process, an etching portion 307 of the silicon nitride film was patterned, and etching was performed using the heated aqueous potassium hydroxide solution. In Fig. 6E, a beam portion 311 is formed by this etching, and a desired sensor structural body can be formed by causing a time required for obtaining an almost vertical section upon etching of the weight portions 103 and 203, the beam portions 104 and 204, and the movable portion 102 to coincide with a time required for obtaining the desired thickness of the driving beam portion during etching. In this embodiment, the aqueous potassium hydroxide solution was used as an etching solution. Alternatively, etching solutions such as hydrazine, ammonia, tetramethyl ammonium oxide, and the like, which anisotropically etch silicon, can be used. As shown in Fig. 6E, contact holes for electrical connections with the piezo resistor portions 303 were formed in the silicon nitride film 304 by the photolithography method and a reactive ion etching method using carbon tetrafluoride, and a resist pattern for an electrode was formed. Thereafter, aluminum electrodes were formed in a desired pattern using a deposition method and a lift-off method. The sensor was cut into a desired size from the silicon substrate, thus forming the base portion 112. The silicon nitride film on the rear surface of the base portion 112 was removed by a reactive ion etching method. Thereafter, a 1-mm thick pyrex glass plate (Corning Glass Works #7740) 312, in which a groove portion 313 having a depth of about 0.5 mm was formed in advance in a central portion by etching in a 50% hydrofluoric acid solution so as to leave a frame portion having a width of about 1 mm, was anodic-bonded to the base portion 112, thus attaining a state shown in Fig. 6F. The anodic bonding was performed at a temperature of 380°C while the base portion 112 side was set at a positive potential, the pyrex glass side was set at a negative potential, and a voltage of 400 V was applied for 10 minutes. Thereafter, an epoxy-based adhesive which was imparted conductivity by dispersing an Ag powder was coated on an excitation PZT piezoelectric element 314 and an excitation detection PZT piezoelectric element 109 each of which was formed with silver electrodes on two surfaces by coating a silver paste by a screen printing method, and was subjected to a polarization treatment. Then, these piezoelectric elements were adhered under pressure on lead electrodes (not shown) formed on the silicon single-crystal substrate, thus attaining a state shown in Fig. 6G. Finally, the base portions 112 formed with the sensors were adhered to face each other, as shown in Fig. 6H. In this embodiment, the two base portions were adhered under pressure to sandwich a Teflon sheet 315 having a width of 2 mm and a thickness of 0.5 mm therebetween.

In this embodiment, the outer dimensions of the base portion were 17 x 14 mm, and the thickness and length of each of the driving beam portion 311 and the PZT sintered body 314 were respectively 300 $\mu$m and 5 mm.

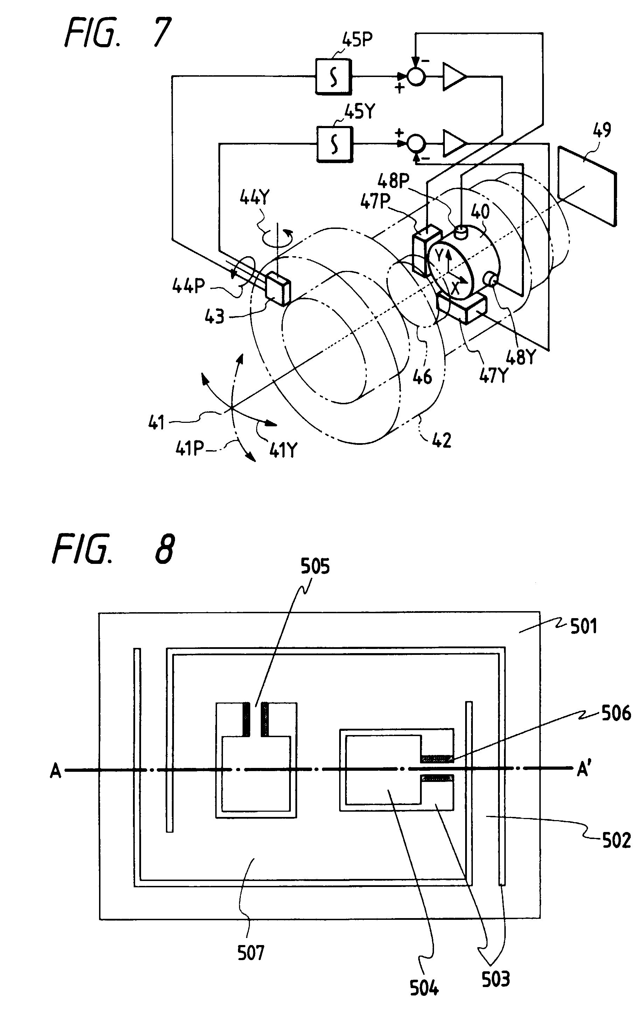

Fig. 7 shows an image blur suppression system for a camera using the angular velocity sensor of this embodiment.

The system illustrated in Fig. 7 includes a correction optical system 40, a center 41 of an optical axis, vertical and horizontal camera shake directions 41P and 41Y, a lens barrel 42, an angular velocity sensor 43 described in the above embodiment, integration circuits 45P and 45Y, a portion 46 of a stationary lens, correction optical system driving units 47P and 47Y, correction optical system position sensors 48P and 48Y, and an image surface 49.

Two angular velocities in detection directions 44P and 44Y are detected by the angular velocity sensor 43, and signals from the angular velocity sensor are integrated by the integration circuits 45P and 45Y to be converted into camera shake angular displacements. The converted angular displacement signals are input to the driving units 47P and 47Y for displacing the correction optical system 40 in the X- and Y-directions to drive the correction optical system 40, thus assuring image stabilization on the image surface 49, and suppressing an image blur. At this time, correction position detection is performed using the position detection sensors 48P and 48Y of the correction optical system 40, and detection signals are utilized in feedback control. The image blur suppression system for the camera with the above-mentioned arrangement satisfactorily operated to suppress an image blur.

In this embodiment, the angular velocity sensor is arranged on the distal end portion of the lens barrel 42, but may be arranged at another position convenient for a camera design as long as the angular velocity detection directions 44P and 44Y coincide with the camera shake directions 41P and 41Y. For example, since the angular velocity sensor of this embodiment has a low-profile structure, it may be arranged behind the image surface 49 without forming a large bulge unlike a conventional angular velocity sensor. For this reason, limitations on an apparatus design can be decreased.

The characteristics of the above-mentioned angular velocity sensor of this embodiment can be further improved. In Fig. 6H, when the two sensor portions are adhered to each other under reduced pressure, the interior of the sensor can be set in a reduced pressure state. In this case, the electro-mechanical conversion characteristics of a vibration can be improved, and sensitivity can be improved to about 10 to 100 times. Furthermore, in this case, since the sensor is not easily influenced by a change in temperature via air, the sensor output can be thermally stabilized.

Upon adhesion of the two sensor portions, a glass substrate etched into a required pattern may be used in place of the Teflon sheet, and a voltage of about 400 V may be applied to the glass substrate and the silicon substrate while a carbon dioxide laser beam is radiated onto only portions to be adhered at normal temperature, and the silicon substrate side is set at a positive potential. In this case, adhesion was performed by radiating the carbon dioxide laser beam from the substrate end face side. With this method, the silicon and glass substrates can be firmly adhered to each other, and in particular, when the interior of the sensor is set in a reduced pressure state, the production yield and reliability of the sensor can be improved.

Furthermore, some of the circuit components described in this embodiment may adopt a CMOS arrangement to form a circuit in the silicon substrate on which the sensor is formed. In this case, since the circuit arrangement can be rendered compact, the system using the sensor can be rendered further compact.

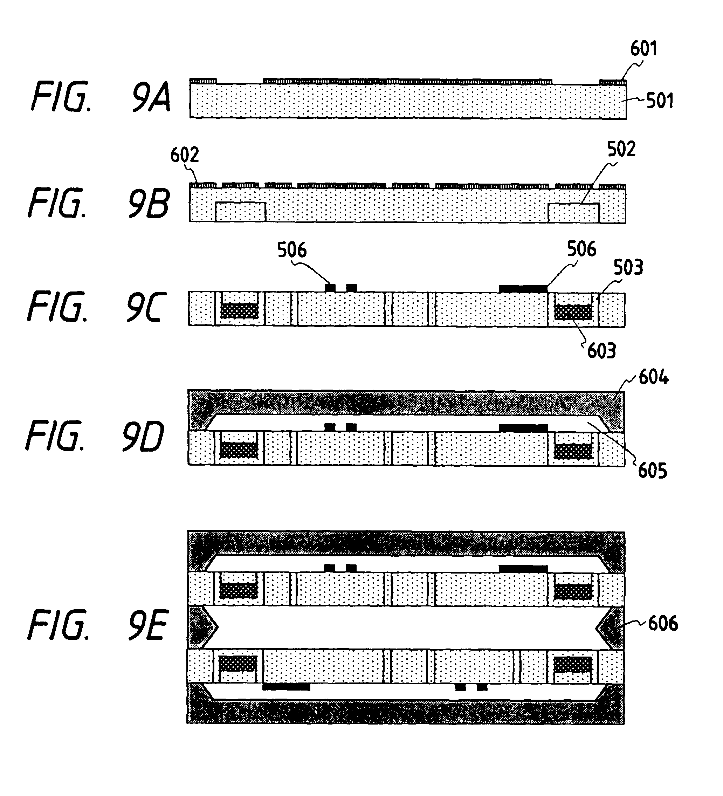

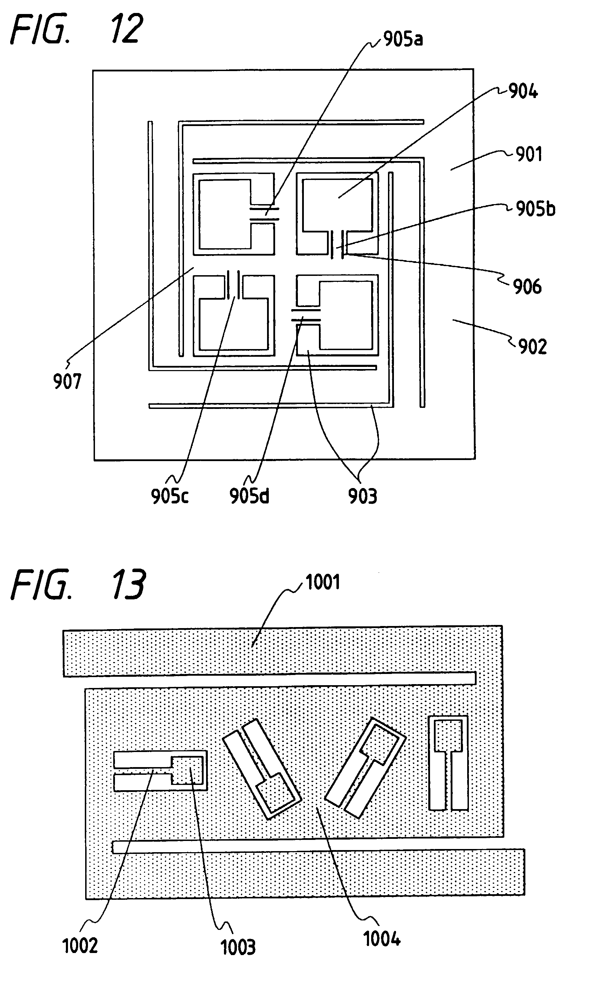

Figs. 8 to 12 are views for explaining the second embodiment of the present invention. Fig. 8 is a plan view of a sensor, Figs. 9A to 9E are sectional views showing manufacturing processes, taken along a line A - A' of an angular velocity sensor shown in Fig. 8, Figs. 10 and 11 are plan views showing modifications of a detection portion of the angular velocity sensor, and Fig. 12 is a plan view for explaining the angular velocity sensor adopting another modification.

Fig. 8 and Figs. 9A to 9E illustrate a glass substrate 501, a driving hinge beam portion 502, a gap portion 503, a weight portion 504, a detection beam portion 505, a detection piezoelectric element 506, a movable portion 507 formed with a detection portion, an etching mask portion 601, an ultraviolet exposure mask 602, a driving piezoelectric element 603, sealing silicon substrates 604 and 606, and a sensor gap portion 605.

In an angular velocity sensor shown in Fig. 8, an angular velocity is detected by detecting, on the basis of a difference between outputs from a pair of detection piezoelectric elements 506 formed at two sides of a neutral surface of flexure of the beam portion, a strain amount generated when the weight portion 504 and the detection beam portion 505 receive a Coriolis' force, and the beam portion 505 is subjected to flexural deformation in the planar direction. The movable portion 507 formed with a detection portion is vibrated in a direction substantially perpendicular to the substrate surface by a driving mechanism constituted by a pair of hinge beam portions 502. As a driving source at this time, a PZT sintered body as a piezoelectric element is used.

The method of manufacturing the angular velocity sensor of this embodiment shown in Fig. 8 will be described in detail below with reference to Figs. 9A to 9E.

In this embodiment, as a glass substrate 501, 1-mm thick PEG3 photosensitive glass (available from HOYA CORP.) was used. In Fig. 9A, a photoresist layer was formed on the surface of the glass substrate 501 by a spin coating method, and was patterned into a pattern for forming a hinge beam portion 502, thus forming an etching mask portion 601. Thereafter, etching was performed using a special-purpose Teflon jig (not shown), which allowed only one surface of the substrate to contact a 50% hydrofluoric acid solution, so that the hinge beam portion 502 had a required thickness. In this embodiment, the thickness of about 0.4 μm was left by controlling the etching time. Then, an ultraviolet mask portion 602 which was formed into a pattern of a gap portion 503 (Fig. 8) was formed on a surface opposite to the etched surface of the substrate. Ultraviolet rays were radiated, and after the mask portion was removed, the radiated portion was developed by a heat treatment. Then, ultraviolet rays were further radiated to expose a non-exposed portion. Thereafter, etching was performed using a 10% hydrofluoric acid solution, thereby forming the gap portion 503. Gold electrodes having chromium base electrodes for detection electrodes (not shown), a zinc oxide film and gold electrodes (not shown) on the zinc oxide film for the detection piezoelectric elements 506, and detection portion lead electrodes (not shown) were formed into a required pattern using a sputtering method and a lift-off method. Furthermore, after driving portion lead electrodes (not shown) and driving electrodes (not shown) were formed by similar methods, a PZT sintered body as the driving source 603 was adhered to the glass substrate following the same procedure as in the first embodiment, thus obtaining a state shown in Fig. 9C. A driving detection PZT sintered body (not shown) and electrodes were also formed at the movable portion side of the hinge beam portion by the same method. As shown in Fig. 9D, a silicon substrate 604 formed with a gap portion 605 by anisotropic etching was adhered to the glass substrate. Finally, as shown in Fig. 9E, the two sensor structures (Fig. 9D) were adhered to each other to sandwich portions 606 formed by anisotropic etching therebetween, thus completing the angular velocity sensor of the present embodiment.

In Figs. 9D and 9E, the substrates were adhered using an epoxy-based adhesive.

In the above-mentioned arrangement, when a difference signal of output voltages generated from the two piezoelectric elements 506 upon flexural deformation was processed using the same electrical circuit as that in the prior art described previously with reference to Fig. 2 so as to detect outputs, angular velocities in the two axial directions could be satisfactorily detected.

When the angular velocity sensor of the second embodiment was used in an image blur control system for a camera as in the first embodiment, the image blur control system could satisfactorily operate.

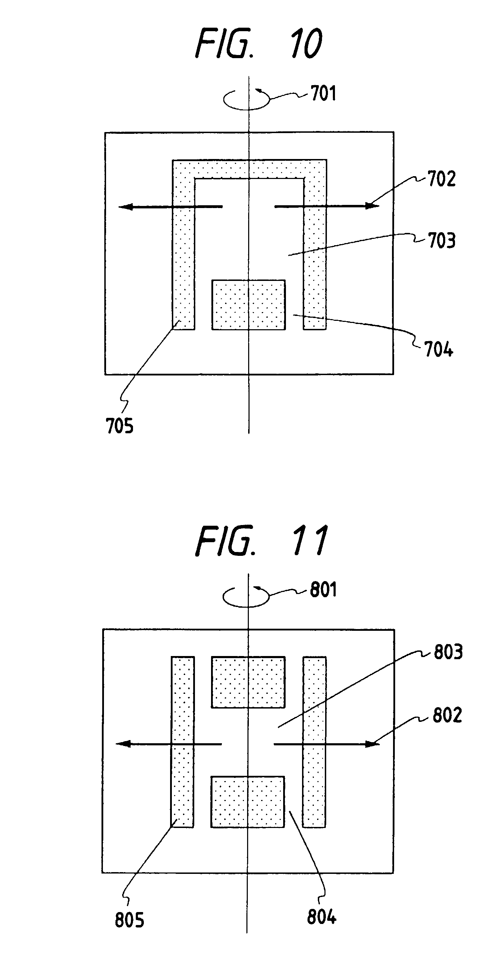

Modifications of the shapes of the angular velocity sensor of this embodiment will be described below with reference to Figs. 10 to 12.

Figs. 10 and 11 are explanatory views of different sensor detection portion structures of this embodiment, and illustrate angular velocity detection directions 701 and 801, Coriolis' force detection directions 702 and 802, weight portions 703 and 803, detection beam portions 704 and 804, and gap portions 705 and 805.

A detection portion shown in Fig. 10 is constituted by two beam portions 704, and has a structure which is not easily twisted in the angular velocity direction 701. Thus, this structure is advantageous for a case wherein a strong angular velocity is to be detected. A detection portion shown in Fig. 11 is constituted by four beam portions 804, and has a structure which does not easily vibrate in the direction perpendicular to the plane of drawing of Fig. 11. This structure is suitable for a use in a place where a vertical vibration is considerable.

Fig. 12 shows an angular velocity sensor including a driving mechanism constituted by four driving hinges, and illustrates a glass substrate 901, a hinge beam portion 902, gap portions 903, weight portions 904, detection beam portions 905a to 905d, detection piezoelectric elements 906, and a movable portion 907 formed with detection portions. In this modification, since the driving mechanism is constituted by the four hinge beam portions 902, when the movable portion 907 formed with the detection portions is vertically vibrated by the four hinge beam portions 902, a rotation in the planar direction of the movable portion does not easily occur, and an error caused by the rotation in the planar direction of the movable portion can be minimized. In this modification, since the vibrating movable portion 907 has a symmetrical structure, an offset from the center of gravity of the movable portion can be prevented, and a more precise vertical vibration is realized. At this time, detection outputs in the corresponding angular velocity directions can be obtained on the basis of a sum of the outputs of the detection beam portions 905a and 905d, and a sum of the outputs of the detection beam portions 905b and 905c.

Fig. 13 shows an angular velocity sensor capable of performing four-axis detection, which sensor is obtained by further developing the angular velocity sensor of the second embodiment, in accordance with the third embodiment of the present invention.

Fig. 13 illustrates a hinge beam portion 1001, detection beam portions 1002, weight portions 1003, and a movable portion 1004 formed with detection portions. When the angular velocity sensor of this embodiment was manufactured following the same procedures as in the second embodiment, and was similarly driven, angular velocities about axes in formation directions at 30° angular intervals of the corresponding detection beam portions 1002 could be detected. The angular velocity sensor of this embodiment can be used as a control sensor for an apparatus such as a robot arm, which makes complicated motions, and an angular velocity sensor capable of detecting angular velocities about multiple axes can be easily formed by forming detection portions in arbitrary detection axis directions, as needed.

As described above, the angular velocity sensor of the present invention has an effect of making compact a system requiring multi-axis detection since each sensor portion can be rendered compact, and a common mounting portion of the sensor portions can be adopted. This effect can provide great practical advantages in compact devices such as a still camera, a video camera, and the like, and remarkably eliminates design and functional limitations on a system due to large sensor portions.

Furthermore, in the present invention, the photolithography method and etching method having high working precision are used in formation of detection portions, and detection sensitivity can be improved by minimizing a working error. Also, since at least two vibration portions are commonly driven, a highly controllable vibration which is not easily influenced by a disturbance can be achieved by a sufficient driving force. Since the size of the driving portion can be increased, working and assembling error per unit size can be minimized, and sensitivity can be improved.

In addition, since common circuit components such as a common driving circuit, and common mounting members can be used, cost can be greatly reduced.

## Claims

1. An angular velocity sensor formed from a single flat substrate (101) having

   - gaps (105) therein defining:

     -- a first portion (102) which can be vibrated in a direction perpendicular to a remaining portion of the substrate,
     -- a second portion (103) provided in said first portion and connected thereto by a first beam (104), extending in a first direction in the substrate plane and supporting said second portion; and
     -- a third portion (203) provided in said first portion and connected thereto by a second beam (204) extending in a second direction in the substrate plane and different from the first direction and supporting said third portion;

   - driving means (108) for vibrating said first portion in said perpendicular direction;
   - detection means (106, 206) provided in said first and second beams for detecting deformations thereof due to Coriolis' forces resulting from rotation about said first and/or second directions; and
   - a signal processing circuit (131, 132) for detecting angular velocities of rotations about the first and/or second directions as the rotational axes on the basis of the deformations of said first and second beam portions detected by said detection means.

2. A sensor according to claim 1, wherein said first portion (102) has a cantilever beam structure.

3. A sensor according to claim 1 or 2, wherein said second and third portions (103, 203), and said first and second beams (104, 204) are formed by removing portions, around said second and third portions, and said first and second beams of said substrate by etching.

4. A sensor according to claim 1, 2 or 3, wherein said driving means (108) comprises a piezoelectric element.

**5.** A sensor according to any one of claims 1 to 4, wherein said detection means (106, 206) comprises a pair of piezo resistors (106a, 106b) formed on each of said first and second beams (104, 204), and strain detection circuits (117, 217) each for detecting a difference between resistances of said piezo resistors generated upon deformation of the corresponding beam, and outputting a detection signal.

**6.** A sensor according to any one of claims 1 to 4, wherein said detection means (106, 206) comprises a pair of piezoelectric elements formed on each of said first and second beams (104, 204).

**7.** A sensor according to any one of claims 1 to 6, further comprising a vibration detector (109a, 109b) for detecting a vibration of said first portion (102).

**8.** A sensor according to claim 7, wherein said signal processing circuit (131) comprises a synchronous detection circuit (128) for synchronously detecting an output from said detection means (106, 206) with respect to an output from said vibration detector (109a, 109b).

**9.** A sensor according to any one of claims 1 to 8, wherein the first and second directions are perpendicular to each other.

**10.** A sensor according to any one of claims 1 to 9, further comprising a fourth portion provided in still another portion of said first portion, a third beam extending different from the first and second directions, for supporting said fourth portion, a fifth portion provided in still another portion of said first portion, and a fourth beam extending in a fourth direction parallel to said surface and different from the first, second, and third directions, for supporting said fifth portion (Fig. 12).

**11.** A sensor according to any one of claims 1 to 10, wherein
said flat substrate (1, 901) consists of photosensitive glass.

**12.** An arrangement of two angular velocity sensors (101, 102) according to any one of the preceeding claims, wherein
the flat substrates of each sensor are arranged parallel to one another and the first and second beams of each sensor extend in the same directions, respectively, and including:

- a first differential amplifier (244) for differentiating the detection signals from the first beam of one of the two sensors and from the first beam of the other of the two sensors, and
- a second differential amplifier (245) for differentiating detection signals from the second beam of said one of the two sensors and from the second beam of said other of the two sensors.

**13.** A camera comprising:

- a lens for forming an image on an image surface;
- an angular velocity sensor according to any one of the preceding claims, attached to said camera, for outputting a detection signal;
- an integration circuit for outputting an angular displacement signal by integrating the output signal from said angular velocity sensor; and
- a correction optical system for correcting a blur of the image formed on the image surface in accordance with the angular displacement signal output from said integration circuit.

**14.** A camera according to claim 13, wherein
a direction of the rotation about the first direction as the rotation axis coincides with a vertical camera shake direction, and a direction of the rotation about the second direction as the rotational axis coincides with a horizontal camera shake direction.

**15.** A camera according to claim 13, further comprising a lens barrel for holding said lens, and wherein said angular sensor is attached to a distal end portion of said lens barrel.

**Patentansprüche**

**1.** Winkelgeschwindigkeitssensor, gebildet aus einem einzelnen flachen Substrat (101), mit

- Lücken (105) darin, die definieren:

-- einen ersten Abschnitt (102), der in einer Richtung senkrecht zum verbleibenden Abschnitt des Substrats in Schwingung versetzt werden kann,

-- einen zweiten Abschnitt (103), der im ersten Abschnitt vorgesehen und mit diesem durch einen ersten Träger (104) verbunden ist, welcher sich in eine erste Richtung in der Substratebene erstreckt und den zweiten Abschnitt trägt, und

-- einen dritten Abschnitt (203), der im ersten Abschnitt vorgesehen und hiermit durch einen zweiten Träger (204) verbunden ist, der sich in eine zweite, von der ersten Richtung verschiedene Richtung in der Substratebene erstreckt und den dritten Abschnitt trägt;

- einer Ansteuereinrichtung (108) zum In-Schwingung-Versetzen des ersten Abschnitts in der senkrechten Richtung,
- Erfassungseinrichtung (106, 206), die im ersten und zweiten Träger zur Erfassung von Deformationen derselben infolge von Coriolis-Kräften vorgesehen sind, die aus einer Drehung um die erste und/oder zweite Richtung resultieren, und
- einer Signalverarbeitungsschaltung (131, 132) zum Erfassen der Winkelgeschwindigkeiten der Drehungen um die erste und/oder zweite Richtung als Drehachsen auf der Grundlage der Deformationen des ersten und zweiten Trägerabschnitts, die durch die Erfassungseinrichtung erfaßt wurden.

2. Sensor nach Anspruch 1, wobei der erste Abschnitt (102) eine Ausleger-Trägerstruktur hat.

3. Sensor nach Anspruch 1 oder 2, wobei der zweite und dritte Abschnitt (103, 203) und der erste und zweite Träger (104, 204) durch Entfernen von Abschnitten des Substrats um den zweiten und dritten Abschnitt und den ersten und zweiten Träger durch Ätzen gebildet sind.

4. Sensor nach Anspruch 1, 2 oder 3, wobei die Ansteuereinrichtung (108) ein piezoelektrisches Element aufweist.

5. Sensor nach einem der Ansprüche 1 bis 4, wobei die Erfassungseinrichtung (106, 206) ein Paar Piezo-Widerstände (106a, 106b), die jeweils auf dem ersten und zweiten Träger (104, 204) gebildet sind, und Dehnungserfassungsschaltungen (117, 217) jeweils zur Erfassung der Differenz zwischen den Widerstandswerten der Piezo-Widerstände, die bei Deformation des entsprechenden Trägers erzeugt werden, und zur Ausgabe eines Nachweissignals aufweist.

6. Sensor nach einem der Ansprüche 1 bis 4, wobei die Erfassungseinrichtung (106, 206) ein Paar piezoelektrischer Elemente aufweist, die auf dem ersten und zweiten Träger (104, 204) gebildet sind.

7. Sensor nach einem der Ansprüche 1 bis 6, weiter aufweisend einen Schwingungsdetektor (109a, 109b) zum Nachweis einer Schwingung des ersten Abschnitts (102).

8. Sensor nach Anspruch 7, wobei die Signalverarbeitungsschaltung (131) eine Synchronerfassungsschaltung (128) zum synchronen Erfassen eines Ausgangs von der Erfassungseinrichtung (106, 206) bezüglich eines Ausgangs von Schwingungsdetektor (109a, 109b) aufweist.

9. Sensor nach einem der Ansprüche 1 bis 8, wobei die erste und zweite Richtung senkrecht zueinander sind.

10. Sensor nach einem der Ansprüche 1 bis 9, weiter aufweisend einen vierten Abschnitt, der in einem noch anderen Teil des ersten Abschnitts vorgesehen ist, einen sich abweichend von der ersten und zweiten Richtung erstreckenden dritten Träger zum Tragen des vierten Abschnitts, einen in noch einem anderen Teil des ersten Abschnitts vorgesehenen fünften Abschnitt, und einen vierten, sich in einer vierten Richtung parallel zur Oberfläche und abweichend von der ersten, zweiten und dritten Richtung erstreckenden Träger zum Tragen des fünften Abschnitts (Fig. 12).

11. Sensor nach einem der Ansprüche 1 bis 10, wobei das flache Substrat (1, 901) aus photoempfindlichem Glas besteht.

12. Anordnung von zwei Winkelgeschwindigkeitssensoren (101, 102) nach einem der vorangehenden Ansprüche, wobei die flachen Substrate jedes Sensors parallel zueinander angeordnet sind und sich die ersten und zweiten Träger jedes Sensors in dieselbe Richtung erstrecken, und die einschließt:

- einen ersten Differenzverstärker (244) zu einer Differenzbildung der Nachweissignale vom ersten Träger eines der beiden Sensoren und vom ersten Träger des anderen der beiden Sensoren und
- einen zweiten Differenzverstärker (245) zur Differenzbildung von Erfassungssignalen vom zweiten Träger des einen der beiden Sensoren vom zweiten Träger des anderen der beiden Sensoren.

13. Kamera mit:

- einem Objektiv zur Erzeugung eines Bildes auf einer Bildfläche;
- einem Winkelgeschwindigkeitssensor nach einem der vorangehenden Ansprüche, der an der Kamera angebracht ist, zur Ausgabe eines Nachweissignals;
- einer Integratorschaltung zur Ausgabe eines Winkelverstellungssignals durch Integration der Ausgangssignale vom Winkelgeschwindigkeitssensor; und
- einem optischen Korrektursystem zur Korrektur eines auf der Bildfläche erzeugten Bildes in Übereinstimmung mit dem Winkelverstellungssignal, das von der Integratorschaltung ausgegeben wird.

**14.** Kamera nach Anspruch 13, wobei
eine Richtung einer Drehung um die erste Richtung als Drehachse mit einer vertikalen Kamera-Wackelrichtung zusammenfällt und eine Richtung einer Drehung um die zweite Richtung als Drehachse mit einer horizontalen Kamera-Wackelrichtung zusammenfällt.

**15.** Kamera nach Anspruch 13, weiter aufweisend eine Objektivfassung zum Halten des Objektivs, wobei der Winkelsensor am entfernten Endabschnitt der Objektivfassung angebracht ist.

**Revendications**

**1.** Capteur de vitesse angulaire formé à partir d'un substrat plat unique (101), comportant

- des interstices (105) présents dans ce substrat et définissant :

  -- une première partie (102), qui peut être mise en vibration dans une direction perpendiculaire à une partie restante du substrat,
  -- une seconde partie (103) prévue dans ladite première partie et raccordée à cette dernière par une première poutre (104), qui s'étend dans une première direction dans le plan du substrat et supporte ladite seconde partie ; et
  -- une troisième partie (203) prévue dans ladite première partie et raccordée à cette dernière par une seconde poutre (204) qui s'étend dans une seconde direction dans le plan du substrat, différente de la première direction, et qui supporte ladite troisième partie ;

- des moyens de commande (108) pour faire vibrer ladite première partie dans ladite direction perpendiculaire ;
- des moyens de détection (106, 206) prévus dans lesdites première et seconde poutres pour détecter des déformations de ces poutres sous l'effet de forces de Coriolis, qui résultent d'une rotation autour desdites première et/ou seconde directions ; et
- un circuit (131, 132) de traitement de signaux pour détecter des vitesses angulaires de rotation autour des première et/ou seconde directions en tant qu'axes de rotation sur la base des déformations desdites première et seconde parties formant poutres détectées par lesdits moyens de détection.

**2.** Capteur selon la revendication 1, dans lequel ladite première partie (102) possède une structure de poutre en porte à faux.

**3.** Capteur selon la revendication 1 ou 2, dans lequel lesdites seconde et troisième parties (103, 203) et lesdites première et seconde poutres (104, 204) sont formées par élimination de parties, autour desdites seconde et troisième parties, et lesdites première et seconde poutres dudit substrat, par attaque.

**4.** Capteur selon la revendication 1, 2 ou 3, dans lequel lesdits moyens de commande (108) comprennent un élément piézoélectrique.

**5.** Capteur selon l'une quelconque des revendications 1 à 4, dans lequel lesdits moyens de détection (106, 206) comprennent un couple de résistances piézoélectriques (106a, 106b) formées sur chacune des première et seconde poutres (104, 204) et des circuits de détection de contraintes (117, 217) servant chacun à détecter une différence entre des valeurs résistives desdites résistances piézoélectriques, produites lors d'une déformation de la poutre correspondante, et à délivrer un signal de détection.

**6.** Capteur selon l'une quelconque des revendications 1 à 4, dans lequel lesdits moyens de détection (106, 206) comprennent un couple d'éléments piézoélectriques formés sur chacune desdites première et seconde poutres (104, 204).

**7.** Capteur selon l'une quelconque des revendications 1 à 6, comprenant en outre un détecteur de vibrations (109a, 109b) pour détecter une vibration de ladite première partie (102).

**8.** Capteur selon la revendication 7, dans lequel ledit circuit de traitement de signaux (131) comprend un circuit de détection synchrone, (128) pour détecter de façon synchrone un signal de sortie délivré par lesdits moyens de détection (106, 206) en rapport avec un signal de sortie délivré par ledit détecteur de vibrations (109a, 109b).

**9.** Capteur selon l'une quelconque des revendications 1 à 8, dans lequel lesdites première et seconde directions sont perpendiculaires l'une à l'autre.

**10.** Capteur selon l'une quelconque des revendications 1 à 9, comprenant en outre une quatrième partie disposée dans une autre région de ladite première partie, une troisième poutre s'étendant dans une direction différente des première et seconde directions, pour supporter ladite quatrième partie, une cinquième partie prévue dans une autre région de ladite première partie, et une quatrième poutre s'étendant dans une quatrième direction parallèle à ladite surface et différente des première, seconde et troisième directions, pour supporter ladite cinquième partie (figure 12).

11. Capteur selon l'une quelconque des revendications 1 à 10, dans lequel ledit substrat plat (1, 901) est formé d'un verre photosensible.

12. Dispositif comprenant deux capteurs de vitesse angulaire (101, 102) selon l'une quelconque des revendications précédentes, dans lequel les substrats plats de chaque capteur sont disposés parallèlement l'un à l'autre et les première et seconde poutres de chaque capteur s'étendent respectivement dans les mêmes directions, et comprenant :

   - un premier amplificateur différentiel (244) pour former la différence entre les signaux de détection provenant de la première poutre de l'un des deux capteurs et de la première poutre de l'autre des deux capteurs, et
   - un second amplificateur différentiel (245) pour former la différence entre les signaux de détection provenant de la seconde poutre dudit premier des deux capteurs et de la seconde poutre dudit autre des deux capteurs.

13. Appareil de prise de vues comprenant :

   - un objectif pour former une image sur une surface d'ima-ge ;
   - un capteur de vitesse angulaire selon l'une quelconque des revendications précédentes, fixé audit appareil de prise de vues, pour délivrer un signal de détection ;
   - un circuit d'intégration pour délivrer un signal de déplacement angulaire par intégration du signal de sortie délivré par ledit capteur de vitesse angulaire ; et
   - un système optique de correction pour corriger un flou de l'image formée sur la surface d'image en fonction du signal de déplacement angulaire délivré par ledit circuit d'intégration.

14. Appareil de prise de vues selon la revendication 13, dans lequel un sens de rotation autour de la première direction en tant qu'axe de rotation coïncide avec une direction de déplacement vertical de l'appareil de prise de vues, et un sens de rotation autour de la seconde direction en tant qu'axe de rotation coïncide avec une direction de déplacement horizontal de l'appareil de prise de vues.

15. Appareil de prise de vues selon la revendications 13, comprenant en outre un tube d'objectif servant à retenir ledit objectif, et dans lequel ledit capteur angulaire est fixé à une partie d'extrémité distale dudit tube d'objectif.

FIG. 1
PRIOR ART

FIG. 4

# FIG. 2
## PRIOR ART

# FIG. 3

SIGNAL PROCESSING CKT — 231

STRAIN DETECTION CKT — 217

STRAIN DETECTION CKT — 117

107 203 113
109a 115
200
101
102
206
204
103
108
111
110 109b 105 104 106 112
116 114

131

118
PHASE SHIFTING CKT — 119
MULTIPLICATION CKT — 120
121

RECTIFICATION CKT — 122

123

REFERENCE VOLTAGE GENERATING CKT — 124

PHASE SHIFTING CKT — 125

126
BAND-PASS FILTER — 127
SYNCHRONOUS DETECTION CKT — 128
LOW-PASS FILTER — 129
OUTPUT AMPLIFIER — 130

FIG. 5

FIG. 6A

FIG. 6B

FIG. 6C

FIG. 6D

FIG. 6E

FIG. 6F

FIG. 6G

FIG. 6H

FIG. 7

FIG. 8

FIG. 9A

FIG. 9B

FIG. 9C

FIG. 9D

FIG. 9E

## FIG. 10

## FIG. 11

FIG. 12

905a

904

901

905b

906

902

907

905c  905d  903

FIG. 13

1001

1002  1003  1004